# EUROPÄISCHE PATENTANMELDUNG

(11) **EP 0 917 983 A1**
(43) Veröffentlichungstag der Anmeldung: **26.05.1999**
(21) Anmeldenummer: 98120617.0
(22) Anmeldetag: 02.11.1998
(51) Int. Cl.: B60N 2/14, B60R 7/04

(54) **Drehsitz für ein Fahrzeug**

(30) Priorität: 20.11.1997 DE 19751458
(71) Anmelder: Volkswagen Aktiengesellschaft, 38436 Wolfsburg (DE)
(72) Erfinder: Forytta, Karl Heinz, 38446 Wolfsburg (DE)

(57) **Zusammenfassung**

Die Erfindung betrifft einen Drehsitz (1; 2) für ein Fahrzeug mit einer etwa vertikalen Mittelsäule (3) als Drehachse mit wenigstens einem Drehlager. Die Mittelsäule (3) ist mit ihrem unteren Ende (4) an einem Fahrzeugboden (5) befestigt, während an ihrem oberen Ende (6) ein Sitzteil (7) angebracht ist. Zwischen dem Fahrzeugboden (5) und der Sitzteilunterseite (8) steht ein Freiraum (9) als Stauraum zur Verfügung. Erfindungsgemäß ist im Freiraum (9) unter dem Sitzteil (7) wenigstens eine mit dem Sitzteil (7) mitdrehende Ablageschale (15) angebracht. Durch diese Ablageschale (15) können im Freiraum unter dem Drehsitz (1; 2) angeordnete Gegenstände (21) nicht klemmen und eine Drehbewegung des Drehsitzes (1; 2) weder erschweren noch blockieren.

## Beschreibung

Die Erfindung betrifft einen Drehsitz für ein Fahrzeug, insbesondere für ein Wohn- und Freizeitfahrzeug nach dem Oberbegriff des Patentanspruchs 1.

Drehsitze mit einer etwa vertikalen Mittelsäule als Drehachse mit wenigstens einem Drehlager sind allgemein bekannt. Dabei ist die Mittelsäule mit ihrem unteren Ende direkt oder über eine Bodenplatte an einem Fahrzeugboden befestigt, und am oberen Ende der Mittelsäule ist mit einem Freiraum zum Fahrzeugboden ein Sitzteil angebracht. Solche Drehsitze werden vor allem als Frontsitze bei Wohn- und Freizeitfahrzeugen, wie Großraumlimousinen, Wohnmobilen und Campingbussen verwendet. Im Fahrbetrieb sind solche Drehsitze nach vorne gerichtet und können für Wohnzwecke zur Herstellung einer Sitzgruppe ggf. in Verbindung mit einem Tisch und einer Rücksitzbank in eine nach rückwärts gerichtete Stellung verdreht werden.

Unter dem verdrehbaren Sitzteil um die Mittelsäule herum besteht ein Freiraum, der als Stauraum, z. B. zum Abstellen von Schuhen, etc. nutzbar ist. Dabei ergibt sich jedoch das Problem, daß auf dem Fußboden abgestellte Gegenstände bei voller Ausnutzung dieses Stauraums auch an der Sitzteilunterseite anliegen und sich bei einer Verdrehung des Sitzteils mit einer Relativbewegung zwischen dem drehfesten Fahrzeugboden und der Sitzteilunterseite einklemmen und damit eine Sitzverdrehung schwergängig wird oder blockiert. Zudem sind Gegenstände, beispielsweise Schuhe, die bei nach vorne gerichtetem Drehsitz von vorne abgestellt worden sind, bei einem anschließend nach rückwärts gedrehten Drehsitz ungünstig an dessen Rückseite zu finden.

Aufgabe der Erfindung ist es, einen gattungsgemäßen Drehsitz für ein Fahrzeug so weiterzubilden, daß sowohl der Drehsitz als auch ein Stauraum unter einem Sitzteil mit verbesserter Funktion nutzbar sind.

Diese Aufgabe wird mit den Merkmalen des Patentanspruchs 1 gelöst.

Gemäß Anspruch 1 ist im Freiraum unter dem Sitzteil wenigstens eine mit dem Sitzteil mitdrehende Ablageschale angebracht. Da eine solche Ablageschale mit dem Sitzteil mitdrehend ausgeführt ist, ergibt sich keine Relativbewegung zwischen der Sitzteilunterseite und der Aufstandsfläche für in der Ablageschale verstaute Gegenstände. Dadurch können solche Gegenstände nicht klemmen und eine Drehbewegung des Drehsitzes erschweren oder blockieren. Durch die mitdrehende Ablageschale werden verstaute Gegenstände relativ zur Sitzposition vorteilhaft immer an der gleichen Stauposition vorgefunden.

Vorteilhaft wird der gesamte Freiraum unter dem Sitzteil um die Mittelsäule herum als Stauraum genutzt mit nur einem geringen Spalt zwischen dem Boden einer Ablageschale und dem Fahrzeugboden. Um den Stauraum möglichst vollständig auszunutzen, wird bevorzugt nur eine großräumige Ablageschale verwendet, deren Schalenseitenwände jeweils im Sitzteilseitenbereich liegen und dort mit dem Sitzteil verbunden sind. Die Seitenschalenteile sind in einer U-Form über einen Schalenboden verbunden, wobei durch den Schalenboden die Mittelsäule hindurchgeht. Die Ablageschale ist für ein bequemes Verstauen von Gegenständen vorzugsweise im vorderen und/oder hinteren Sitzteilbereich offen. Bei einer von vorne nach hinten durchgehenden Schalenöffnung ist eine Beladung von der Sitzteilvorder- und Sitzteilrückseite her möglich.

Anstelle einer großräumigen Ablageschale können je nach den konkreten Gegebenheiten auch zwei oder mehrere aneinander gereihte Ablageschalen vorteilhaft einsetzbar sein, die auch in der Art von Schubläden verschiebbar und abnehmbar gestaltet sein können.

Die Schalenwände und/oder der Schalenboden können je nach dem vorgesehenen Stauzweck durchgehend plattenförmig und/oder mit Durchbrüchen und/oder gitterförmig ausgebildet sein, wobei die letztgenannten Ausführungsformen material- und gewichtsparende Lösungen sind.

Die erfindungsgemäße Anordnung eignet sich für an sich bekannte Drehsitze mit einer Bodenplatte am unteren Ende der Mittelsäule und einem Sitzteilrahmen mit Sitzpolster am oberen Ende der Mittelsäule. Am Sitzteilrahmen ist zudem in an sich bekannter Weise eine bevorzugt neigungsverstellbare Sitzlehne gehalten. Weiter sind Drehsitze allgemein bekannt, bei denen die Mittelsäule als bevorzugt höhenverstellbare Teleskopanordnung mit einem Außenrohr und einem Innenrohr ausgeführt ist. Dabei kann das Außenrohr entweder drehfest mit dem Fahrzeugboden oder drehfest und dadurch mitdrehend mit dem Sitzteil verbunden sein. Wenn das Außenrohr am Sitzteil befestigt ist und mit diesem mitdreht, können die ebenfalls mitdrehende Ablageschale oder mehrere Ablageschalen sowohl am Sitzteil als auch stabil am Außenrohr befestigt werden.

In einer weiteren Ausgestaltung des Drehsitzes wird vorgeschlagen, an einer Lehnenrückseite eine Staubox, insbesondere als Abfallbox anzubringen. Der Boden dieser Staubox soll dabei in der Höhe der Sitzteilunterseite und damit oberhalb der Ablageschale liegen, wodurch sowohl die erforderliche Fußfreiheit im Bereich der Ablageschale gegeben ist und zudem eine Befüllung der Ablageschale von der Sitzteilrückseite her durch die Staubox nicht behindert ist.

Anhand einer Zeichnung wird die Erfindung näher erläutert.

Es zeigen:
- Fig. 1: eine schematische Rückansicht eines Fahrersitzes als Drehsitz mit Ablageschale und
- Fig. 2: eine schematische, perspektivische Rückansicht eines Beifahrersitzes als Drehsitz mit Ablageschale und Staubox.

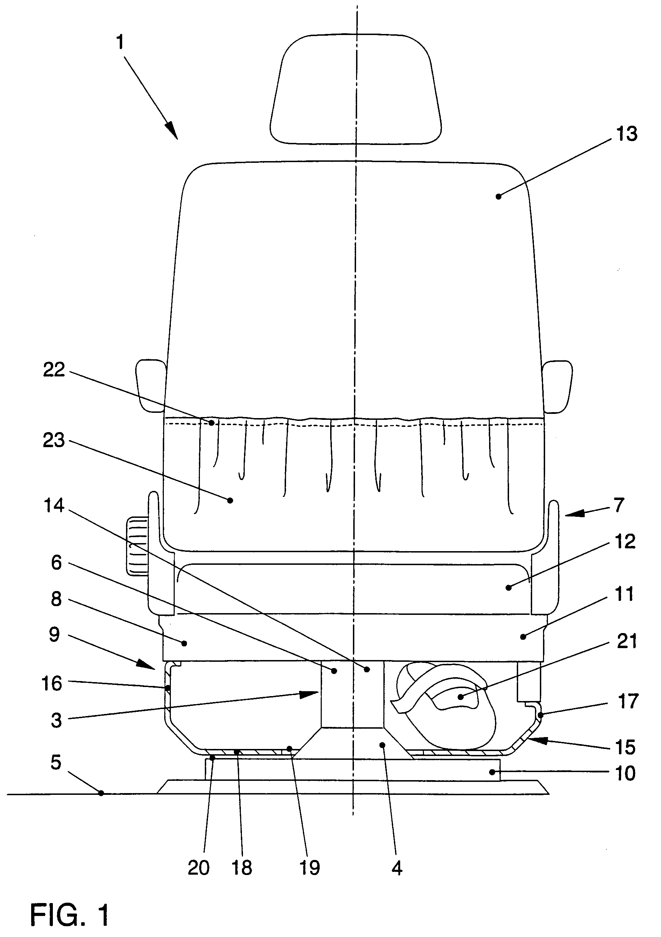

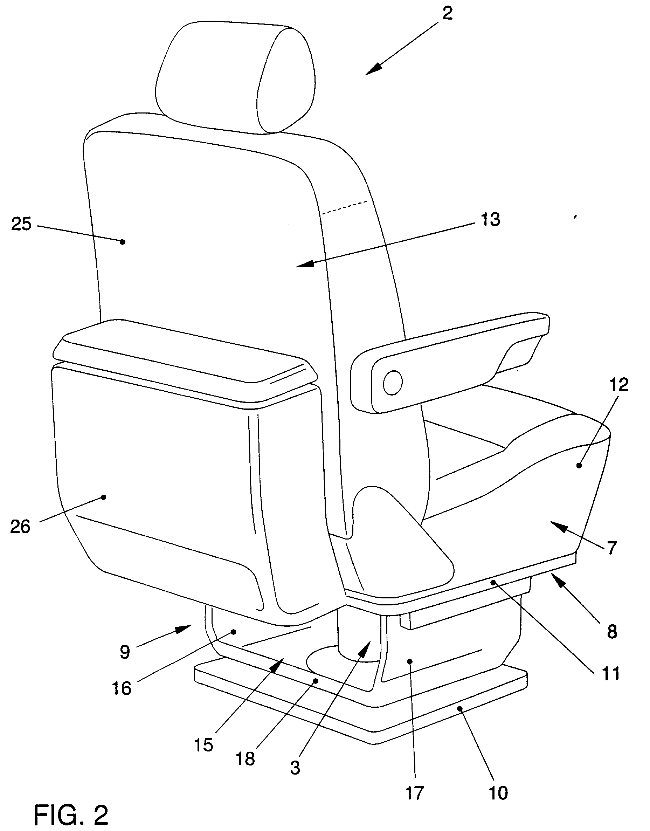

In der Fig. 1 ist eine Rückansicht eines Fahrersitzes 1 und in der Fig. 2 eine Rückansicht eines Beifahrersitzes 2 eines Wohn- und Freizeitfahrzeugs dargestellt, die im Fahrbetrieb jeweils nach vorne gerichtet sind und für Wohnzwecke zur Herstellung einer Sitzgruppe, z. B. in Verbindung mit einem Tisch und einer Rücksitzbank, in eine nach rückwärts gerichtete Stellung verdreht werden können.

Der Fahrersitz 1 weist eine vertikale Mittelsäule 3 als Drehachse auf. Diese Mittelsäule 3 weist an ihrem unteren Ende 4 eine Bodenplatte 10 auf, über die die Mittelsäule 3 an einem Fahrzeugboden 5 befestigt ist. Am oberen Ende 6 der Mittelsäule 3 ist ein Sitzteil 7 angebracht, wobei zwischen der Bodenplatte 10 und der Sitzteilunterseite 8 ein Freiraum 9 als Stauraum zur Verfügung steht.

Das Sitzteil 7 ist aus einem Sitzteilrahmen 11 und einem Sitzpolster 12 aufgebaut, wobei am Sitzteilrahmen 11 eine Sitzlehne 13 neigungsverstellbar gehalten ist. Die Mittelsäule 3 umfaßt ein Außenrohr 14 und ein hier nicht dargestelltes, in das Außenrohr 14 höhenverstellbar eingeführtes Innenrohr.

Im Freiraum 9 unter dem Sitzteil 7 ist eine mit dem Sitzteil 7 mitdrehende Ablageschale 15 angebracht. Diese Ablageschale 15 besteht aus zwei Schalenseitenwänden 16, 17 und einem Schalenboden 18 mit einem Mittelsäulendurchgang 19. Die Ablageschale 15 ist mit den Schalenseitenwänden 16, 17 am Sitzteilrahmen 11 befestigt.

Die Ablageschale 15 ist dabei so ausgebildet, daß der gesamte Freiraum 9 unter dem Sitzteil 7 mit nur einem geringen Spalt 20 zur Bodenplatte 10 hin eingenommen wird. Die Ablageschale 15 ist ferner im vorderen und hinteren Sitzteilbereich offen ausgebildet, so daß eine einfache Beladung der Ablageschale 15 von der Sitzteilvorder- und Sitzteilrückseite her möglich ist. In der Darstellung der Fig. 1 sind in der Ablageschale 15 Schuhe 21 aufgenommen.

Wie aus der Fig. 1 ferner ersichtlich, ist an der Rückseite der Sitzlehne 13 eine mit einem Gummiband 22 an der Sitzlehne 13 gehaltene Tuchtasche 23 zum Verstauen von insbesondere flachen Gegenständen vorgesehen.

Bei dem in der Fig. 2 dargestellten Beifahrersitz 2, der einen grundsätzlich gleichen Aufbau wie der Fahrersitz 1 aufweist, sind gleiche Teile mit gleichen Bezugszeichen versehen. Zusätzlich ist beim Beifahrersitz 2 jedoch an der Lehnenrückseite 25 eine Staubox 26 angeordnet, die insbesondere als Abfallbox dient. Der Boden dieser Staubox 26 liegt dabei in der Höhe der Sitzteilunterseite 8 oberhalb des Bereichs der Ablageschale 15.

## Patentansprüche

1. Drehsitz für ein Fahrzeug, mit einer etwa vertikalen Mittelsäule als Drehachse mit wenigstens einem Drehlager, wobei die Mittelsäule mit ihrem unteren Ende an einem Fahrzeugboden befestigt ist und an ihrem oberen Ende ein Sitzteil trägt, und wobei zwischen dem Fahrzeugboden und der Sitzteilunterseite ein Freiraum als Stauraum zur Verfügung steht, dadurch gekennzeichnet, daß im Freiraum (9) unter dem Sitzteil (7) wenigstens eine mit dem Sitzteil (7) mitdrehende Ablageschale (15) angebracht ist.

2. Drehsitz nach Anspruch 1, dadurch gekennzeichnet, daß der gesamte Freiraum (9) als Stauraum unter dem Sitzteil (7) mit einem nur geringen Spalt (20) zum Fahrzeugboden (5) hin von der Ablageschale (15) eingenommen ist.

3. Drehsitz nach Anspruch 1 oder 2, dadurch gekennzeichnet, daß die Ablageschale (15) aus zwei Schalenseitenwänden (16, 17) jeweils im Sitzteilseitenbereich und einem Schalenboden (18) mit einem Mittelsäulendurchgang (19) besteht und die Ablageschale (15) im vorderen und/oder hinteren Sitzteilbereich offen ist.

4. Drehsitz nach einem der Ansprüche 1 bis 3, dadurch gekennzeichnet, daß die Schalenseitenwände (16, 17) und/oder der Schalenboden (18) der Ablageschale (15) zumindest teilweise plattenförmig und/oder mit Durchbrüchen und/oder gitterförmig ausgebildet sind.

5. Drehsitz nach einem der Ansprüche 1 bis 4, dadurch gekennzeichnet, daß am unteren Ende (4) der Mittelsäule (3) eine Bodenplatte (10) und/oder am oberen Ende (6) der Mittelsäule (3) ein Sitzteilrahmen (11) mit einem Sitzpolster (12) des Sitzteils (7) befestigt ist, wobei am Sitzteilrahmen (11) eine Sitzlehne (13) bevorzugt neigungsverstellbar gehalten ist.

6. Drehsitz nach einem der Ansprüche 1 bis 5, dadurch gekennzeichnet,
daß die Mittelsäule (3) ein drehfestes Standrohr ist und die Drehlagerverbindung zwischen dem oberen Endbereich der Mittelsäule (3) und dem Sitzteil bevorzugt über ein am Sitzteil befestigtes, in die Mittelsäule (3) von oben eingeführtes, bevorzugt höhenverstellbares Teleskoprohr erfolgt, und
daß die Ablageschale (15) fest und mitdrehend am Sitzteil (7), bevorzugt an dessen Sitzteilrahmen (11) befestigt ist.

7. Drehsitz nach einem der Ansprüche 1 bis 5, dadurch gekennzeichnet,
daß die Mittelsäule (3) ein mit dem Sitzteil (7) fest verbundenes und mit diesem mitdrehendes Außenrohr (14) ist in das ein am Fahrzeugboden (5) oder einer Bodenplatte (10) drehfest befestigtes Innenrohr bevorzugt höhenverstellbar eingeführt ist, und daß die Ablageschale (15) fest und mitdrehend am Sitzteil (7) und/oder am Außenrohr (14) befestigt ist.

8. Drehsitz nach einem der Ansprüche 1 bis 7, dadurch gekennzeichnet, daß an einer Lehnenrückseite (25) eine Staubox (26), insbesondere als Abfallbox angebracht ist, deren Boden in der Höhe der Sitzteilunterseite (8) oberhalb des Bereichs der Ablageschale (15) liegt.
